# FASCICULE DE BREVET EUROPEEN

(11) **EP 2 371 592 B1**
(45) Date de publication et mention de la délivrance du brevet: **29.07.2015**
(21) Numéro de dépôt: 11160677.8
(22) Date de dépôt: 31.03.2011
(51) Int. Cl.: B60J 1/20, E06B 9/68

(54) **Store d'occultation pour véhicule automobile, à moyens anti-pincement**
Schattenrollo für Kraftfahrzeuge mit Hemmschützmittel
Roller blind for motor vehicles, with anti-jamming means

(30) Priorité: 22.04.2010 FR 1053084; 02.04.2010 FR 1052541
(43) Date de publication de la demande: 05.10.2011
(73) Titulaire: Advanced Comfort Systems France SAS - ACS France, 79302 Bressuire Cedex (FR)
(72) Inventeur: Aubineau, Herman, 49360, MAULEVRIER (FR)
(74) Mandataire: Vidon Brevets & Stratégie

(56) Documents cités:
- EP-A2- 0 333 677
- WO-A1-91/10036
- DE-U1- 9 215 788
- FR-A1- 2 546 869
- FR-A1- 2 686 372

## Description

Le domaine de l'invention est celui de l'équipement des véhicules automobiles. Plus précisément, l'invention concerne les stores à enrouleurs prévus pour occulter, dans les véhicules des surfaces vitrées (vitre latérale, lunette arrière, pare-brise et/ou pavillon vitré,...) ou des zones de rangement (cache-bagages,...).

Les stores à enrouleur sont généralement constitués d'au moins une toile, montée sur un tube enrouleur et équipés à leur extrémité libre, d'une barre de tirage, qui permet de contrôler le déploiement et le repli de la toile, en fonction des besoins de l'utilisateur.

Dans certains cas, notamment pour les stores de petite dimension (par exemple pour certaines vitres latérales), la manipulation de la barre de tirage est libre : l'utilisateur s'en saisit, et la déplace pour l'installer dans la position souhaitée. Dans de nombreux autres cas, la barre de tirage est guidée le long de deux rails de tirage latéraux, qui peuvent selon les cas être parallèles ou non parallèles, selon la configuration du véhicule et/ou de la zone à occulter.

La barre de tirage porte alors, généralement, deux patins (ou d'autres moyens de guidage, tels que des roulettes) à ses extrémités, adaptés pour assurer un bon coulissement dans les rails. De tels rails peuvent être utilisés pour les stores à enrouleurs manuels ou motorisés. De nombreuses techniques ont été proposées pour mettre en oeuvre une telle motorisation, qui peut agir sur le tube enrouleur et/ou sur la barre de tirage.

Outre les objectifs classiques de simplicité de fabrication, de montage, d'entretien et d'utilisation, ainsi que les objectifs de fiabilité et d'ergonomie, l'homme du métier recherche des solutions assurant une bonne tension de la toile, que celle-ci soit totalement ou partiellement déployée, et cherche à lutter contre les risques de blocage et/ou de détérioration, notamment lorsque la barre de tirage se met légèrement de travers, par exemple lorsqu'un corps étranger empêche le déplacement de cette barre de tirage dans l'un des rails.

Un exemple de store motorisé est décrit dans le document de brevet FR-2 934 202. Selon cette approche, la barre de tirage est entraînée par l'intermédiaire d'un câble circulant à l'intérieur de la barre de tirage et le long des deux rails de guidage. Les deux extrémités du câble sont montées sur des moyens d'enroulement contrôlés par un même moteur, de façon que les deux côtés de ce câble soient enroulés ou déroulés exactement de la même longueur, garantissant un déplacement symétrique des deux extrémités de la barre de tirage, et le cas échéant un rééquilibrage de la barre de tirage, lorsque celle-ci tend à se mettre de travers.

Cette approche est efficace, lorsque l'entraînement de la toile d'occultation est assuré uniquement par l'intermédiaire de la barre de tirage. Cependant, dans certains cas et notamment pour les stores de grande longueur, destinés à occulter un pavillon vitré par exemple, il est souhaitable que le tube enrouleur soit lui-même motorisé.

Dans ce cas, pour obtenir une tension permanente et homogène de la toile, quel que soit son niveau de déploiement, on comprend que la vitesse de déroulement ou d'enroulement de la toile au niveau du tube enrouleur doit coïncider avec la vitesse de déplacement de la barre de tirage. Cependant, sauf à mettre en oeuvre des moyens de régulation complexes, ceci est peu aisé, car la longueur de toile déroulée ou enroulée à chaque tour du tube enrouleur n'est pas constante (alors que la vitesse de déplacement de la barre de tirage est, en principe linéaire). En effet, le diamètre de la toile enroulée varie (il est de plus en plus faible au fur et à mesure du déploiement de la toile) et la longueur de toile déroulée à chaque tour de tube enrouleur est donc variable.

Il en résulte, selon les cas, soit une tension insuffisante de la toile, si la barre de tirage ne se déplace pas suffisamment vite, et donc l'apparition, sous l'effet de la pesanteur, d'une poche inesthétique et risquant d'introduire des blocages ou des plis, soit un forçage de la barre de tirage sur la toile, qui risque de détériorer celle-ci et/ou les moteurs.

Des problèmes similaires peuvent exister avec les stores à entraînement manuel.

Par ailleurs, il existe dans de tels stores, des risques de pincement (par exemple du doigt d'un utilisateur) et/ou de détérioration de la toile et/ou de ses moyens d'entraînement, notamment lorsqu'une des extrémités de la barre de tirage est bloquée ou ralentie. Dans ce cas, l'autre extrémité de la barre de tirage continue à se déplacer, et la barre de tirage se met de travers (d'où un risque de détérioration ou de casse) et force sur l'obstacle (d'où un risque de pincement).

L'invention a notamment pour objectif de pallier cet inconvénient de l'art antérieur.

Plus précisément, un objectif de l'invention est de fournir un store à enrouleur manuel ou motorisé, qui permette également de lutter contre les risques de pincement ou de détérioration, lorsqu'un corps étranger, ou le doigt d'une personne dans le véhicule, interagit avec la barre de tirage.

L'invention a également pour objectif, au moins dans certains modes de réalisation, d'assurer une bonne tension de la toile d'occultation dans toutes les positions de déploiement, totale et/ou intermédiaire, et lors du déplacement en enroulement et en déroulement de cette toile.

Un autre objectif de l'invention est, au moins dans certains modes de réalisation, de fournir une telle technique, qui soit simple et peu coûteuse à mettre en oeuvre, sans moyens de régulation et sans moteurs multiples, dans le cas des stores motorisés.

Encore un autre objectif de l'invention est de fournir une telle technique qui soit simple à fabriquer, à monter et à mettre en oeuvre et fiable dans la durée.

Ces objectifs, ainsi que d'autres qui apparaîtront plus clairement par la suite sont atteints selon l'invention à l'aide d'un store d'occultation pour véhicule automobile, comprenant une toile d'occultation dont une première extrémité est solidaire d'un tube enrouleur et une seconde extrémité est solidaire d'une barre de tirage, la barre de tirage étant guidée en coulissement entre deux rails de guidage et entraînée par au moins un élément d'entraînement, et portant à chacune de ses extrémités, une poulie de renvoi, renvoyant le ou un desdits éléments d'entraînement à 90°, pour les guider à l'intérieur de ladite barre de tirage, le tube enrouleur portant à chacune de ses extrémités, une poulie d'enroulement de forme tronconique, sur laquelle peut s'enrouler au moins une portion du ou d'un desdits éléments d'entraînement.

Selon l'invention, une portion du ou d'au moins un des éléments d'entraînement circulant à l'intérieur de la barre de tirage porte un patin bloqueur, apte à venir en contact avec l'une desdites poulies de renvoi pour l'immobiliser, en cas de blocage de ladite barre de tirage.

Ainsi, grâce au patin bloqueur on assure, de façon simple et efficace, une fonction anti-pincement.

Le blocage, ou un freinage suffisant, peut également être obtenu par frottement sur le rail et/ou le patin.

Les éléments d'entraînement sont des éléments filaires, aptes à être enroulés sur des poulies prévues à cet effet, tels que des câbles, des cordes, notamment des cordes renforcées, des chaînettes,...

Préférentiellement, lesdites poulies d'enroulement du tube enrouleur sont de forme tronconique.

Ainsi, le diamètre d'enroulement dudit câble peut coïncider sensiblement avec le diamètre d'enroulement de la toile, ou, en d'autres termes, de manière à compenser les variations de longueur de toile enroulée ou déroulée à chaque tour du tube. En d'autres termes encore, les diamètres d'enroulement du ou des éléments d'entraînement varient de la même façon que le diamètre d'enroulement de la toile, ce qui permet d'assurer une tension constante, ou sensiblement constante, de la toile, quelle que soit sa position.

Ceci permet par ailleurs que la force devant être appliquée sur la toile, et donc sur la barre de tirage, est constante ou sensiblement constante, quelle que soit la position de cette barre de tirage, c'est-à-dire aussi bien au début qu'à la fin du déroulement.

Selon un mode de réalisation de l'invention, ledit tube enrouleur est entraîné en rotation par des moyens de motorisation.

Le ou lesdits éléments d'entraînement peuvent notamment être guidés par au moins deux deuxièmes poulies de renvoi montées respectivement au voisinage de l'extrémité de chacun desdits rails éloignée dudit tube enrouleur, de façon que le ou lesdits éléments d'entraînement soient déviés de 180° pour tirer la barre de tirage lors du déploiement de ladite toile d'occultation.

Selon un mode de réalisation particulier, on peut prévoir deux éléments d'entraînement montés symétriquement chacun sur l'une desdites poulies d'enroulement.

Dans ce cas, lesdits deux éléments d'entraînement peuvent être reliés par des moyens élastiques, à l'intérieur de ladite barre de tirage. Ces moyens élastiques peuvent notamment comprendre un ressort hélicoïdal.

Ces moyens élastiques permettent de compenser de légers écarts entre l'enroulement de la toile et l'enroulement des éléments d'entraînement, malgré la forme tronconique, et/ou d'assurer l'équilibrage de la barre de tirage.

Comme précisé ci-après, ils peuvent également participer à la mise en oeuvre de la fonction anti-pincement.

Selon un mode de réalisation particulier, lesdits moyens élastiques relient deux troisièmes poulies de renvoi sur lesquelles circulent lesdits éléments d'entraînement de façon à être renvoyés chacun à 180° à l'intérieur de ladite barre de tirage.

Ceci permet notamment de réduire le débattement de ces moyens élastiques.

Un store à enrouleur selon l'invention peut notamment être mis en oeuvre pour occulter au moins une portion d'une surface vitrée correspondant à un pavillon vitré et/ou une lunette arrière et/ou un pare-brise ou un coffre dudit véhicule automobile.

D'autres caractéristiques et avantage de l'invention apparaîtront plus clairement à la lecture de la description suivante d'un mode de réalisation préférentiel, donné à titre de simple exemple illustratif et non limitatif, et des dessins annexés parmi lesquels :
- la figure 1 illustre schématiquement un store à enrouleur selon l'art antérieur ;
- la figure 2 est une vue d'un exemple de poulie tronconique adaptée au store de la figure 1 ;
- la figure 3 présente un autre exemple de montage du ressort d'équilibrage dans la barre de tirage ;
- la figure 4 illustre un store à enrouleur selon l'invention, doté d'un mécanisme de blocage de la barre de tirage, assurant notamment une fonction anti-pincement.

L'invention propose donc un store à enrouleur pour véhicule automobile, et notamment pour de grandes surfaces, par exemple pour occulter un pavillon vitré, ou un coffre dans le cas d'un cache-bagages, mettant en oeuvre un tube à enrouleur assurant simultanément le déroulement ou l'enroulement d'une part de la toile d'occultation (ou le cas échéant de plusieurs toiles d'occultation montées l'une à côté de l'autre) et d'autre part de deux éléments d'entraînement de la barre de tirage (qui sont, dans le mode de réalisation décrit par la suite, des câbles d'actionnement, mais qui peuvent également être, par exemple, des cordes renforcées ou tout autre moyen adapté).

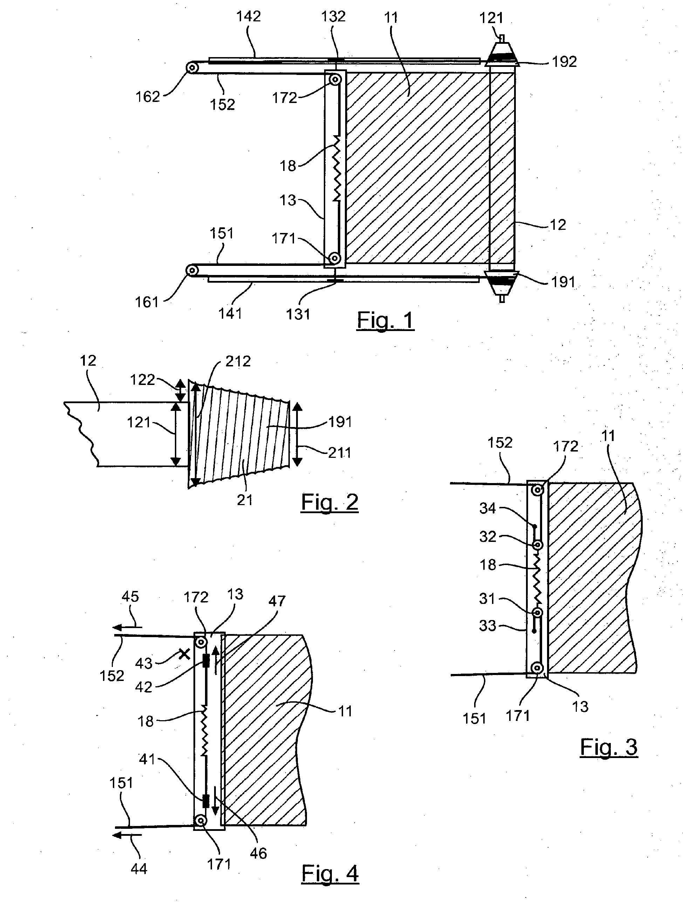

La figure 1 illustre schématiquement un exemple de store selon l'art antérieur. La toile 11 est montée sur un tube enrouleur 12. Le store peut être manuel (l'utilisateur agit directement sur la barre de tirage pour déplacer la toile) ou motorisé.

Dans ce dernier cas, le déplacement en rotation du tube 12 peut être contrôlé par un moteur (non représenté), qui peut notamment être monté directement à l'intérieur du tube, ou au voisinage de celui-ci. L'actionnement peut alors être assuré par tout moyen connu, notamment sur l'arbre 121, de façon directe ou par l'intermédiaire d'une courroie ou d'une chaîne par exemple.

L'extrémité libre de la toile d'occultation 11 (c'est-à-dire l'extrémité opposée à l'extrémité solidarisée au tube enrouleur 12) est solidarisée à une barre de tirage 13, munie de deux patins de guidage 131 et 132, respectivement à chacune de ses extrémités. Ces patins de guidage 131, 132 assurent le guidage et/ou le maintien de la barre de tirage 13, en se déplaçant dans des rails de guidage 141 et 142, prévus à cet effet dans le véhicule.

Selon les cas, ces rails peuvent être parallèles ou non parallèles. De la même façon, il est possible que la barre de tirage 13 ne soit pas parallèle au tube enrouleur 12 et/ou que l'un et/ou l'autre de ces deux éléments ne soit pas perpendiculaire aux rails de guidage 141 et 142.

La barre de tirage 13 est donc associée à deux câbles 151, 152, qui sont déviés de 90° sensiblement dans la barre de tirage 13, pour s'étendre parallèlement à, et à l'intérieur de, celle-ci, à l'aide de deux poulies folles 171 et 172.

En outre, deux câbles 151, 152, sont guidés respectivement dans les rails de guidage 141, 142, ou au voisinage de ceux-ci, jusqu'à leur extrémité la plus éloignée du tube enrouleur 12, où sont prévues des deuxièmes poulies de renvoi 161, 162. Ces deux poulies, qui sont montées folles, assurent une déflexion des câbles 151, 152 de l'ordre de 180°, de façon à revenir vers la barre de tirage 13, et à tirer celle-ci lors du déploiement de la toile 11, et à la retenir lors du repli de cette toile.

Selon un premier mode de réalisation, les extrémités des câbles 151 et 152 pourraient être directement fixées aux extrémités respectives de la barre de tirage 13, ou aux patins 131 et 132. Selon une autre approche, ces câbles 151 et 152 pourraient n'en faire qu'un, circulant à l'intérieur de la barre de tirage, comme illustré dans le document de brevet FR 2 934 202 déjà mentionné.

En outre, selon l'invention, le store de la figure 1 est équipé de moyens assurant une fonction anti-pincement, permettant de freiner et/ou d'interrompre le déplacement de la barre de tirage 13 et donc d'éviter un pincement de doigt, notamment en fin de course de la barre de tirage, même si un moteur est toujours maintenu en action. Pour ceci, comme illustré sur la figure 4, on équipe chaque câble 151, 152 (ou au moins l'un d'entre eux) d'un patin bloqueur 41, 42 montés entre le ressort 18 et, respectivement, les poulies 171, 172, à l'intérieur de la barre de tirage 13.

Ainsi, dans le cas d'un blocage de la barre de tirage 13, par exemple du fait d'un doigt placé à l'emplacement de la croix 43, alors que la toile 11 est en cours de déploiement, les câbles 151, 152 sont entraînés dans le sens illustré par les flèches 44 et 45. Cependant, du fait du blocage 43, la barre de tirage n'avance plus. De ce fait, les câbles 151 et 152 agissent sur le ressort 18, qui s'allonge, les patins 41 et 42 se déplacent alors dans le sens des flèches 46 et 47 et viennent en contact avec les poulies 171, 172 pour les bloquer. De ce fait, la barre de tirage 13 est immobilisée, malgré l'action des câbles 151 et 152, et le risque de pincement du doigt 43 est supprimé, ou à tout le moins réduit, l'utilisateur ayant le temps de retirer sa main.

Dès que le blocage 43 est supprimé, le ressort 18 reprend sa position initiale, et les patins bloqueurs 41 et 42 sont écartés des poulies 171 et 172.

Pour obtenir un blocage plus efficace, il est possible de conformer le patin de façon qu'il épouse la forme de la poulie, ou encore de l'équiper de moyens d'engrenage, pouvant venir en prise avec des éléments complémentaires prévus à cet effet sur la poulie.

Il est à noter que cette approche est indépendante de la forme des poulies d'enroulement (191, 192), c'est-à-dire qu'elles soient tronconiques ou non.

En effet, pour assurer que la distance de déplacement de la barre de tirage coïncide de la façon la plus précise possible avec la longueur de toile déroulée ou enroulée, bien que celle-ci ne soit pas constante linéairement, puisque le diamètre d'enroulement varie à chaque tour du tube enrouleur, ces câbles sont enroulés sur des poulies 191, ou bobines, tronconiques. Ainsi, ces poulies ont également un diamètre variable, défini de façon que la longueur de câble enroulé ou déroulé à chaque tour soit identique, ou à tout le moins très proche, de la longueur de toile enroulée ou déroulée. Toutefois, dans certains modes de réalisation acceptant une tolérance de tension, une poulie d'enroulement classique peut être utilisée.

Les deux extrémités des câbles 151 et 152 sont reliées l'une à l'autre par des moyens élastiques, et dans ce mode de réalisation par un ressort hélicoïdal 18, qui peut notamment assurer des fonctions de compensation, notamment lorsque la barre de tirage 13 se met, ou est mise, légèrement de travers. Le ressort 18 peut également compenser de faibles variations de diamètre entre la toile enroulée sur le tube enrouleur 12 et les poulies tronconiques 191 et 192, si de telles variations faibles existent, ou apparaissent du cours du temps.

Comme indiqué plus haut, ces poulies, ou bobines, tronconiques 191 et 192 sont en effet conçues pour compenser la variation d'épaisseur de l'enroulement de la toile sur le tube enrouleur 12, comme cela apparaît plus clairement sur la figure 2.

Sur cette figure 2, on a illustré l'extrémité du tube enrouleur 12, et la poulie d'enroulement 191. Dans cet exemple, la poulie 191 est munie d'une gorge 21 formant une spirale de guidage du câble 151. Dans d'autres modes de réalisation, la section du tronc de cône peut être lisse ou en marches d'escalier, ou de toute autre forme adaptée.

Le plus petit diamètre 211 de la poulie 191 correspond sensiblement au diamètre 121 du tube enrouleur 12 lorsque aucune toile n'est enroulée sur celui-ci. Ainsi, le premier tour de toile (lorsque celle-ci a été préalablement entièrement déployée) est effectué sur le diamètre 121, et le déplacement correspondant de la barre de tirage est commandé par la portion de diamètre 211 de la poulie 191. Progressivement, à chaque tour de toile (dans le cas de l'enroulement), le diamètre d'enroulement augmente, sensiblement de deux fois l'épaisseur de la toile. Ceci est compensé par l'augmentation progressive du diamètre d'enroulement de la poulie 191. Pour le dernier tour de toile, le diamètre a augmenté de deux fois la hauteur représentée par la flèche 122. Le diamètre maximum 212 de la poulie 191 correspond à cette augmentation.

Le cas échéant, il est possible de prendre en compte la présence de baleines sur la toile, qui peuvent augmenter encore l'épaisseur de la toile repliée. Dans ce cas, le tronc de cône peut ne pas être régulier, et présenter une surépaisseur pour compenser la présence d'une baleine lors d'un tour de toile.

Comme illustré sur la figure 3, le ressort 18 de la figure 1 peut être monté de façon à relier deux troisièmes poulies folles 31 et 32, et non plus directement les extrémités des deux câbles 151 et 152, qui sont fixés à un élément de fixation 33, 34 prévu à cet effet dans la barre de tirage 13. Ainsi, les poulies 31 et 32 imposent une déflexion aux câbles 151, 152 respectivement de l'ordre de 180°. De cette façon, l'effort appliqué sur le ressort 18 est divisé sensiblement par deux.

Le tube 12 est généralement équipé de moyens de rappel, tendant à ramener la toile en position repliée. Dans le cas où le tube 12 est motorisé, ces moyens de rappel ne sont pas impératifs, mais sont généralement prévus. Dans le cas d'un store manuel, le montage des câbles permet une compensation des forces appliquées d'une part au tube 12 et d'autre part à la barre de tirage 13, ce qui permet un arrêt « en tout position » de cette dernière. Des moyens de blocage complémentaires peuvent être prévus, en agissant sur les patins, les câbles et/ou les poulies, selon des techniques connues en elles-mêmes.

Par ailleurs, il est possible d'adapter et de modifier de nombreux aspects des modes de réalisation décrits ci-dessus, et par exemple de modifier le guidage et le renvoi des câbles, en adaptant le trajet de ceux-ci aux besoins, le cas échéant de remplacer au moins certaines poulies par des éléments de guidage fixes. Il est également possible de remplacer le ressort de rappel par une pièce en un matériau élastique adapté.

Le frottement des patins dans les rails peut être défini de façon qu'il soit suffisant important pour assurer de façon simple un arrêt possible en toute position, dès que le moteur est arrêté, ou que l'action manuelle sur la barre de tirage est interrompue. D'autres moyens d'arrêt en toute position, ou dans des positions prédéterminés, connus en eux-mêmes, peuvent bien sûr être adaptés.

Les poulies tronconiques sont préférentiellement conformées pour assurer un rattrapage du câble, en cas de blocage de la progression de la barre de tirage. Ainsi, le câble reste dans son logement défini sur la poulie, bien que le moteur continue à tourner, et le câble à se dérouler.

Des moyens de débrayage entre les poulies tronconiques et le tube enrouleur peuvent en outre être prévus, de façon que le ou les câbles restent suffisamment tendus même si le tube continue de tourner alors que la barre de tirage est accidentellement immobilisée. Dans ce cas, les câbles restent tendus, dès lors que des moyens de rappel sont prévus dans la barre de tirage pour les solidariser.

## Revendications

1. Store d'occultation pour véhicule automobile, comprenant une toile d'occultation (11) dont une première extrémité est solidaire d'un tube enrouleur (12) et une seconde extrémité est solidaire d'une barre de tirage (13),
ladite barre de tirage (13) étant guidée en coulissement entre deux rails de guidage (141, 142) et entraînée par au moins un élément d'entraînement (151, 152), et portant à chacune de ses extrémités, une poulie de renvoi (171, 172), renvoyant le ou un desdits éléments d'entraînement (151, 152) à 90°, pour les guider à l'intérieur de ladite barre de tirage (13),
ledit tube enrouleur portant à chacune de ses extrémités, une poulie d'enroulement (191,192), sur laquelle peut s'enrouler au moins une portion du ou d'un desdits éléments d'entraînement (151, 152),
**caractérisé en ce qu'**une portion dudit ou d'au moins un desdits éléments d'entraînement (151, 152) circulant à l'intérieur de ladite barre de tirage (13) porte un patin bloqueur (41, 42), apte à venir en contact avec l'une desdites poulies de renvoi (171,172) pour l'immobiliser, en cas de blocage de ladite barre de tirage (13).

2. Store d'occultation selon la revendication 1, **caractérisé en ce que** lesdites poulies d'enroulement (191, 192) du tube enrouleur sont de forme tronconique.

3. Store d'occultation selon l'une quelconque des revendications 1 et 2, **caractérisé en ce que** ledit tube enrouleur (12) est entraîné en rotation par des moyens de motorisation.

4. Store d'occultation selon l'une quelconque des revendications 1 à 3, **caractérisé en ce que** le ou lesdits éléments d'entraînement (151, 152) sont guidés par au moins deux deuxièmes poulies de renvoi (161, 162) montées respectivement au voisinage de l'extrémité de chacun desdits rails éloignée dudit tube enrouleur, de façon que le ou lesdits éléments d'entraînement (151, 152) soient déviés de 180° pour tirer la barre de tirage (13) lors du déploiement de ladite toile d'occultation (12).

5. Store d'occultation selon selon l'une quelconque des revendications 1 à 4, **caractérisé en ce qu'**il comprend deux éléments d'entraînement montés symétriquement chacun sur l'une desdites poulies d'enroulement (191, 192).

6. Store d'occultation selon la revendication 5, **caractérisé en ce que** lesdits deux éléments d'entraînement (151, 152) sont reliés par des moyens élastiques (18), à l'intérieur de ladite barre de tirage (13).

7. Store d'occultation selon la revendication 6, **caractérisé en ce que** lesdits moyens élastiques comprennent un ressort hélicoïdal (18).

8. Store d'occultation selon l'une quelconque des revendications 6 et 7, **caractérisé en ce que** lesdits moyens élastiques (18) relient deux troisièmes poulies (31, 32) de renvoi sur lesquelles circulent lesdits éléments d'entraînement (151, 152) de façon à être renvoyés chacun à 180° à l'intérieur de ladite barre de tirage (13).

9. Store d'occultation selon l'une quelconque des revendications 1 à 8, **caractérisé en ce qu'**il est mis en oeuvre pour occulter au moins une portion d'une surface vitrée correspondant à un pavillon vitré et/ou une lunette arrière et/ou un pare-brise ou un coffre dudit véhicule automobile.

## Patentansprüche

1. Verdunklungsvorhang für ein Kraftfahrzeug, welcher ein Verdunklungstuch (11) umfasst, von dem ein erstes Ende mit einem Aufwickelrohr (12) fest verbunden ist, und ein zweites Ende mit einer Zugstrebe (13) fest verbunden ist, wobei die besagte Zugstrebe (13) schiebbar zwischen zwei Leitschienen (141, 142) geführt und durch mindestens ein Antriebselement (151, 152) angetrieben wird, und an jedem ihrer Enden ein Umlenkrad (171, 172) trägt, welches das oder eines der Antriebselemente (151, 152) in einem Winkel von 90° zurückschickt, um diese ins Innere der Zugstrebe (13) zu führen, das besagte Aufwickelrohr an jedem seiner Enden eine Aufwickelwelle (191,192) trägt, auf welcher sich zumindest ein Teil des oder der Antriebselemente (152, 152) aufrollen lässt,
**dadurch gekennzeichnet, dass** ein Teil des oder zumindest eines der Antriebselemente (151, 152), welche im Inneren des Zugstrebes (13) zirkulieren, eine Blockierkufe (41, 42) trägt, welche imstande ist, in Kontakt mit einem der Umlenkräder (171, 172) zu kommen, um im Falle einer Blockade die Zugstrebe (13) anzuhalten.

2. Verdunklungsvorhang nach Anspruch 1, **dadurch gekennzeichnet, dass** die Aufwickelwellen (191, 192) des Aufwickelrohres kegelförmig sind.

3. Verdunklungsvorhang nach einem der Ansprüche 1 und 2, **dadurch gekennzeichnet, dass** das besagte Aufwickelrohr (12) mittels eines Motors rotierend angetrieben wird.

4. Verdunklungsvorhang nach einem der Ansprüche 1 bis 3, **dadurch gekennzeichnet, dass** das oder die besagten Antriebselemente (151, 152) durch mindestens zwei zweite Umlenkräder (161, 162) geführt werden, welche jeweils benachbart zu dem vom Aufwickelrohr entfernten Ende derart an jeder der Schienen befestigt sind, dass das oder die besagten Antriebselemente (151, 152) um einen Winkel von 180° umgelenkt worden, um die Zugstrebe (13) während der Entfaltung des Abdeckungstuchs (12) zu ziehen.

5. Verdunklungsvorhang nach einem der Ansprüche 1 bis 4, **dadurch gekennzeichnet, dass** er zwei Antriebselemente enthält, welche jeweils symmetrisch auf einer der Aufwickelwellen (191, 192) befestigt sind.

6. Verdunklungsvorhang nach Anspruch 5, **dadurch gekennzeichnet, dass** die zwei Antriebselemente (151, 152) durch elastische Mittel (18) mit dem Inneren des Zugstrebes (13) verbunden sind.

7. Verdunklungsvorhang nach Anspruch 6, **dadurch gekennzeichnet, dass** die elastischen Mittel eine Spiralfeder (18) umfassen.

8. Verdunklungsvorhang nach einem der Ansprüche 6 und 7, **dadurch gekennzeichnet, dass** die elastischen Mittel (18) zwei dritte Umlenkräder (31, 32) verbinden, auf welchen die besagten Antriebselemente (151, 152) zirkulieren, sodass sie je in einem Winkel von 180° ins Innere der Zugstrebe (13) zurückgeschickt werden.

9. Verdunklungsvorhang nach einem der Ansprüche 1 bis 8, **dadurch gekennzeichnet, dass** er eingesetzt wird, um mindestens einen Teil von einer Scheibenoberfläche zu verdunkeln, welche zu einer Autodachscheibe und/oder einer Heckscheibe und/oder einer Windschutzscheibe oder einem Kofferraum des Kraftfahrzeugs gehört.

## Claims

1. Screening blind for a motor vehicle,comprising a screening cloth (11) a first end of which being integral with a winding tube (12) and a second end being integral with a draw-bar (13);
said draw-bar (13) being guided in a sliding motion between two guide rails (141, 142) and driven by at least one driving element (151, 152), and carrying, at each of its ends, an idler pulley (171, 172) which redirects said driving element, or one of said driving elements (151, 152), at 90° in order to guide them inside said draw-bar (13);
said winding tube carrying, at each of its ends, a winding pulley (191, 192) onto which at least a portion of said driving element, or of one of said driving elements (151, 152), can be wound;
**characterised in that** a portion of said driving element, or of at least one of said driving elements (151, 152), which runs inside said draw-bar (13, carries a jamming shoe (41, 42) which is able to come into contact with one of said redirecting pulleys (171, 172) in order to immobilise it, in the event of a jam of said draw-bar (13).

2. Screening blind according to Claim 1, **characterised in that** said winding pulleys (191, 192) of the winding tube are in the shape of a truncated cone.

3. Screening blind according to of Claims 1 or 2, **characterised in that** said winding tube (12) is driven in rotation by motorising means.

4. Screening blind according to any of Claims 1 to 3, **characterised in that** said driving element or elements (151, 152) are guided by at least two second idler pulleys (161, 162) which are mounted, respectively, in the vicinity of that end of each of the said rails which is remote from said winding tube, in such a way that said driving element or elements (151, 152) are deflected by 180° in order to pull the draw-bar (13) when said screening cloth (11) is being deployed.

5. Screening blind according to any of Claims 1 to 4, **characterised in that** it comprises two driving elements which are mounted symmetrically, each on one of said winding pulleys (191, 192).

6. Screening blind according to Claim 5, **characterised in that** said two driving elements (151, 152) are connected by elastic means (18) inside said draw-bar (13).

7. Screening blind according to Claim 6, **characterised in that** said elastic means comprise a helical spring (18).

8. Screening blind according to of Claims 6 or 7, **characterised in that** said elastic means (18) connect two third redirecting pulleys (31, 32) on which said driving elements (151, 152) run in such a way as to be each redirected at 180° inside said draw-bar (13).

9. Screening blind according to any of Claims 1 to 8, **characterised in that** it is implemented to screen at least a portion of a glazed surface corresponding to a glazed roof and/or a rear window and/or a windscreen or a trunk of said motor vehicle.
